# FASCICULE DE BREVET EUROPEEN

(11) **EP 1 748 169 B1**
(45) Date de publication et mention de la délivrance du brevet: **30.04.2008**
(21) Numéro de dépôt: 06118135.0
(22) Date de dépôt: 28.07.2006
(51) Int. Cl.: F02C 7/28, F01D 5/06, F02C 7/20

(54) **Montage d'un support de joint à labyrinthe sur un rotor de turbomachine**
Fixierung einer Dichtungsanordnung auf einem Rotor einer Turbomaschine
Fixation of a seal arrangement on a rotor of a turbomachine

(30) Priorité: 29.07.2005 FR 0508152
(43) Date de publication de la demande: 31.01.2007
(73) Titulaire: SNECMA, 75015 Paris (FR)
(72) Inventeur: DEJAUNE, Claude, 77350, BOISSISE LA BERTRANDT (FR); GROS, Valérie, 77166, GRISY-SUISNES (FR)
(74) Mandataire: David, Daniel

(56) Documents cités:
- US-A- 2 764 266
- US-A- 5 226 788

## Description

L'invention concerne le domaine des turbomachines et des moteurs à turbine à gaz en particulier, et vise le montage d'un élément formant support de joint à labyrinthe sur un rotor du moteur.

Un moteur à turbine à gaz comprend au moins un arbre rotatif monté à l'intérieur d'une structure fixe formant le stator, et dans laquelle il est supporté par l'intermédiaire de paliers. Les paliers sont enfermés dans des carters recueillant notamment l'huile de lubrification. Entre le support d'un palier et le rotor on dispose des joints, en général à labyrinthe, pour éviter que l'huile qui a servi à la lubrification du palier ne fuie hors de la zone de palier et ne vienne polluer le moteur.

Il est connu par le document US 5 226 788 (FLEDDERJOHN ET AL) un écrou axial de rétention permettant de maintenir ensemble deux éléments de rotor pendant le montage.

Un joint à labyrinthe comprend une pièce mobile solidaire du rotor et une pièce fixe solidaire du stator. La pièce mobile est composée d'une pièce de révolution à la surface de laquelle on a ménagé une pluralité de lames radiales ou léchettes, perpendiculaires à l'axe de rotation. La pièce est boulonnée sur le rotor à proximité du palier dont il faut assurer l'étanchéité. Les lames de cette pièce sont maintenues à faible distance radiale d'une bague solidaire de la structure fixe, de telle sorte que tout écoulement de fluide de la zone en surpression d'un côté des lames vers la zone de pression plus faible de l'autre côté des lames soit aussi réduit que possible. La bague est réalisée en un matériau qui s'use ou se déforme préférentiellement par rapport aux lames de telle façon que le joint puisse absorber les dilatations radiales pendant les différentes phases de fonctionnement du moteur. Il s'agit de nid d'abeille ou d'un matériau de type abradable.

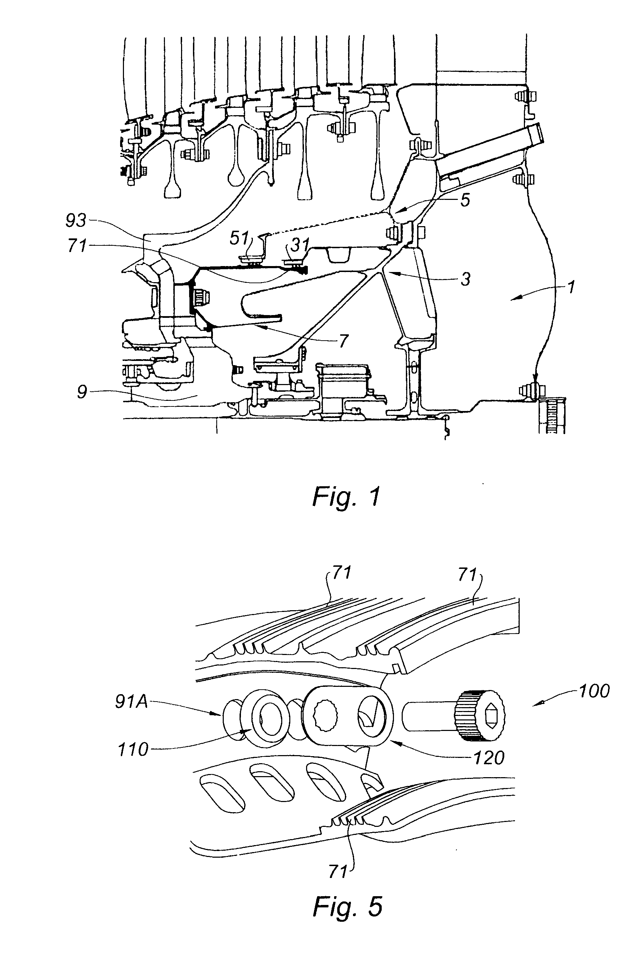

On a représenté, sur les figures 1, 2 et 3, la disposition et le montage d'un tel joint au niveau du palier de turbine d'un moteur à turbine à gaz aéronautique. La figure 1 représente la partie du moteur comprenant le palier 1 du rotor basse pression. On trouve le support de palier 3 dans le carter de récupération d'huile 5 côté stator. La pièce de révolution 7 supportant les joints à labyrinthe et délimitant en partie l'enceinte de palier, est ici à section en U avec une partie centrale radiale. Elle est montée sur une bride 91 radiale de l'arbre 9 du moteur sur laquelle est fixé l'organe ou cône d'entraînement 93 reliant le module 10 de turbine, ici la turbine basse pression, à l'arbre 9. Le support mobile de joint est pourvu de plusieurs groupes de lames radiales 71 coopérant chacun avec une bague, 31 et 51, solidaire du support de palier 3 et du carter de récupération d'huile 5 respectivement.

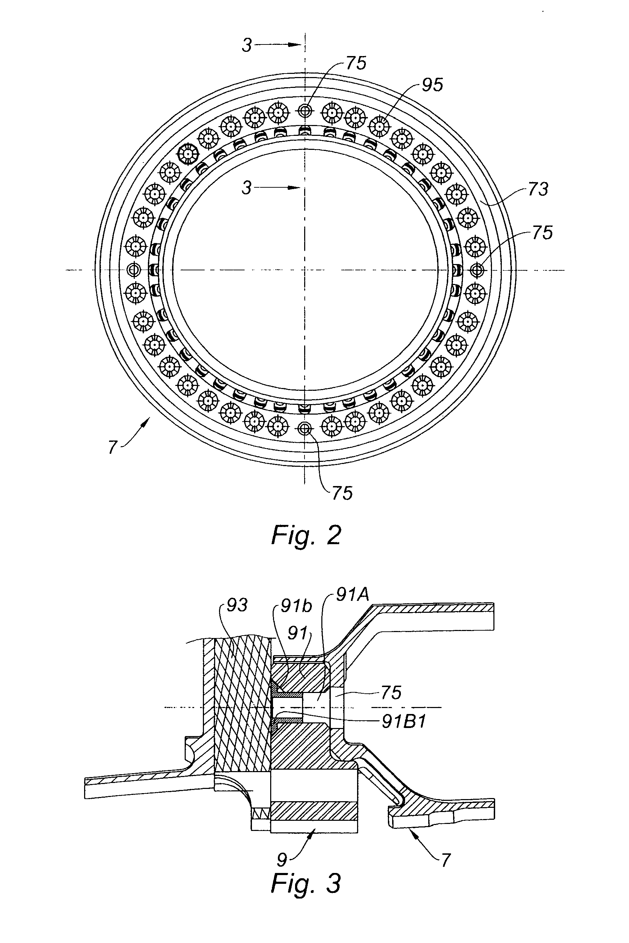

Les figures 2 et 3 montrent plus en détail le montage du support de joint 7 sur le rotor de turbine. Le support de joint est fixé à l'arbre par l'intermédiaire des boulons axiaux 95 traversant la paroi du cône d'entraînement 93 et la bride 91 de l'arbre, en les maintenant assemblés. Ces boulons sont répartis, en raison de la charge transmise par la turbine à l'arbre, sur le pourtour de la bride 91. On prévoit aussi des trous 91 A d'extraction. Il y en a quatre qui sont disposés selon deux diamètres à angle droit. Les trous d'extraction usinés dans la bride 91 sont axiaux, et évasés du côté du cône d'entraînement 93. Les trous d'extraction 91A communiquent avec des trous 75 usinés dans la portion radiale 73 du support de joint 7. On note que, contrairement aux logements des boulons 95, ils ne se prolongent pas dans la paroi du cône 93. Un insert 91B cylindrique est logé dans chacun des quatre trous 91A. Les inserts comprennent une collerette 91B1 s'étendant dans la partie évasée des trous 91A et assurent leur immobilisation axiale. Ces trous, qui restent libres de boulon pendant le temps où le moteur est opérationnel, ont pour fonction de rendre le démontage du cône d'entraînement plus facile. On introduit dans ce but, au moment du démontage du moteur, des vis dans chacun des trous 91A. En vissant des vis d'extraction dans les inserts 91B logés dans les trous 91A, on appuie leur tige contre la paroi du cône qui est aveugle en cet endroit et on crée ainsi une force axiale tendant à écarter le cône 93 du rotor 9.

Des fissures sont susceptibles de se former dans la pièce de révolution 7. En effet les conditions de serrage induisent un risque d'amorçage de fissure par fretting, aux abords d'un trou libre d'extraction.

L'invention a donc pour objet de remédier à ce problème.

Un autre objet est de trouver une solution qui n'entraîne pas de modification des pièces en présence afin qu'elle puisse être adaptée sur les moteurs actuellement en service.

Un autre objet est également de mettre au point une solution qui soit peu onéreuse tant en coût de mise en oeuvre qu'en surcharge pondérale du moteur.

On parvient à réaliser ces objectifs avec une méthode de fixation d'un support de joint à labyrinthe à un arbre de turbomachine, par l'intermédiaire de boulons axiaux ; lesdits boulons axiaux solidarisant par ailleurs un organe d'entraînement de module de turbine audit arbre, des trous d'extraction de l'organe d'entraînement par rapport à l'arbre étant ménagés sur l'arbre,
caractérisée par le fait que l'on serre le support de joint à labyrinthe sur l'arbre dans la zone des trous d'extraction au moyen de vis de serrage introduites dans les trous d'extraction.

En particulier, les trous d'extraction étant pourvus d'un insert de vissage, les vis sont vissées dans l'insert. De préférence on prévoit une douille de guidage de la vis de serrage dans lesdits trous d'extraction.

L'invention porte également sur une turbomachine comprenant un support de joint labyrinthique fixé à arbre de celle-ci selon la méthode ci-dessus.

On décrit maintenant un mode de réalisation non limitatif de l'invention en référence aux dessins annexés sur lesquels :
- la figure 1 est une vue partielle longitudinale de la zone de palier de la turbine basse pression d'un moteur à turbine à gaz à double corps connu,
- la figure 2 est une vue selon la direction axiale vers l'amont du seul support annulaire de joint à labyrinthe de la figure 1,
- la figure 3 est une vue en coupe axiale selon 3-3 de la figure 2, le long d'un trou d'extraction,
- la figure 4 est une vue correspondant à la figure 3 avec la vis de serrage dans le trou d'extraction conformément à l'invention,
- la figure 5 est une vue en perspective éclatée de la zone des trous d'extraction avec présentation de la vis de serrage correspondante.

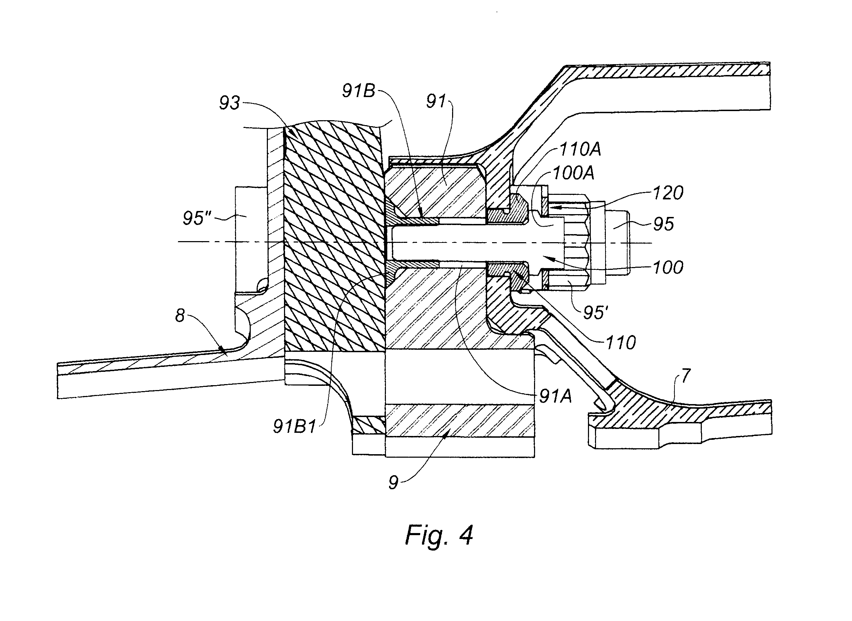

Par rapport à la figure 3, la figure 4 montre la solution de l'invention avec l'incorporation d'une vis de serrage 100. On voit la portion amont du support annulaire de joint à labyrinthe arrière 7 avec la partie radiale 73 en appui contre la bride 91 de l'arbre moteur 9. Le support 7 est maintenu par les boulons dont on voit d'un côté l'écrou 95' du boulon 95 immédiatement voisin du trou d'extraction 91A, et de l'autre côté la tête 95". Les écrous assurent également le maintien du porte joint à labyrinthe avant 8. Les lames radiales de joint à labyrinthe 71 ne sont pas visibles non plus sur cette figure.

Afin d'assurer, conformément à l'invention, le serrage de cette partie de l'anneau contre la bride 91, on a incorporé des vis de serrage 100 dans les trous 91 A d'extraction.

Ces vis de serrage au nombre de quatre, un par trou d'extraction, sont vissées dans les inserts 91B. Une douille 110 reprend le jeu entre la vis 100 et le bord du trou 75 correspondant dans la paroi 73. La douille comprend une collerette 110A prise en sandwich entre la paroi 73 et la tête 100A de la vis. En vissant la vis 100 dans l'insert 91B avec un couple de serrage approprié, on applique cette portion du support annulaire 7 contre la bride 91 avec un effort qui permet de réduire notamment les contraintes d'origine vibratoire.

Une plaque anti-rotation 120 est montée sur la tête 100A de la vis pour interdire tout dévissage intempestif lorsque le moteur est opérationnel. Cette plaque est elle-même maintenue par l'écrou du boulon 95 voisin de la vis 100.

On voit sur la figure 5 les vis, douille et plaque en positon pour la mise en place dans le trou d'extraction.

La solution de l'invention présente l'avantage de pouvoir être mise en oeuvre simplement avec un accroissement de masse du moteur très faible.

## Revendications

1. Méthode de fixation d'un support de joint à labyrinthe (7) à un arbre (9) de turbomachine, par l'intermédiaire de boulons axiaux (95); lesdits boulons axiaux solidarisant par ailleurs un organe (93) d'entraînement de module de turbine audit arbre, des trous (91A) d'extraction de l'organe (93) d'entraînement par rapport à l'arbre étant ménagés sur l'arbre, **caractérisée par le fait que** l'on serre le support (7) de joint à labyrinthe sur l'arbre (9) dans la zone des trous (91A) d'extraction au moyen de vis de serrage (100) introduites dans les trous d'extraction (91A).

2. Méthode de fixation selon la revendication 1 selon laquelle on pourvoit les trous d'extraction (91A) d'un insert de vissage (91B), et l'on visse les vis (100) dans l'insert (91B).

3. Méthode de fixation selon la revendication 2 selon laquelle on introduit une douille de guidage (110) de la vis de serrage (100) dans ledit trou (91A).

4. Méthode de fixation selon l'une des revendications 1 à 3 selon laquelle on verrouille la vis de serrage par une plaque anti-rotation.

5. Méthode de fixation selon l'une des revendications 1 à 4 dont le module de turbine est le module basse pression du moteur.

6. Turbomachine comprenant un arbre sur lequel sont fixés un organe (93) d'entraînement de module de turbine et un support de joint labyrinthique (7), par l'intermédiaire de boulons axiaux (95), et sur lequel sont ménagés des trous (91 A) d'extraction de l'organe (93), le support (7) étant serré dans la zone des trous (91A) au moyen de vis de serrage (100) introduites dans les trous d'extraction (91 A).

## Claims

1. Method for attaching a labyrinth seal support (7) to a turbine engine shaft (9) by means of axial bolts (95), said axial bolts also securing a device (93) for driving the turbine module with said shaft, holes (91a) for extracting the drive device (93) with respect to the shaft being provided on the shaft, **characterized in that** the labyrinth seal support (7) is tightened onto the shaft (9) into the zone of the extraction holes (91A) by means of tightening screws (100) introduced into the extraction holes (91 A).

2. Method of attachment according to claim 1, wherein extraction holes (91 A) are provided with a screwing insert (91B), and the screws (100) are screwed into the insert (91B).

3. Method of attachment according to claim 2, wherein a bush (110) is introduced for guiding the tightening screws (100) into said hole (91A).

4. Method of attachment according to one of claims 1 to 3, wherein the tightening screw is locked by an anti-rotation, plate.

5. Method of attachment according to one of claims 1 to 4, wherein the turbine module is the low pressure module of the engine.

6. Turbine engine comprising a shaft on which are mounted a device (93) for driving a turbine module and a labyrinth seal support (7), by means of axial bolts (95) and on which are arranged holes (91A) for extracting said device (93), said support (7) being tightened into the zone of the extraction holes (91 A) by means of tightening screws (100) introduce into the extraction holes (91 A).

## Patentansprüche

1. Verfahren zum Befestigen eines Labyrinthdichtungsträgers (7) an einer Turbomaschinenwelle (9) über axiale Bolzen (95); wobei die axialen Bolzen im übrigen ein Organ (93) zum Antrieb des Turbinenmoduls fest mit der Welle verbinden, wobei Löcher (91A) zur Extraktion des Antriebsorgans (93) bezüglich der Welle an der Welle angeordnet sind, **dadurch gekennzeichnet, daß** man den Labyrinthdichtungsträger (7) an der Welle (9) in der Zone der Extraktionslöcher (91A) mittels Einspannschrauben (100) einspannt, die in die Extraktionslöcher (91A) eingeführt sind.

2. Befestigungsverfahren nach Anspruch 1, nach welchem man die Extraktionslöcher (9 1 A) mit einem Verschraubungseinsatz (91 B) versieht und die Schrauben (100) in dem Einsatz (91 B) verschraubt.

3. Befestigungsverfahren nach Anspruch 2, nach welchem man eine Führungshülse (110) für die Einspannschraube (100) in das Loch (91A) einführt.

4. Befestigungsverfahren nach einem der Ansprüche 1 bis 3, nach welchem man die Einspannschraube durch eine Drehhemmungsplatte verriegelt.

5. Befestigungsverfahren nach einem der Ansprüche 1 bis 4, bei welchem das Turbinenmodul das Niederdruckmodul des Motors ist.

6. Turbomaschine mit einer Welle, an welcher ein Organ (93) zum Antrieb des Turbinenmoduls und ein Labyrinthdichtungsträger (7) über axiale Bolzen (95) befestigt sind und an welcher Löcher (91A) zur Extraktion des Organs (93) vorgesehen sind, wobei der Träger (7) in der Zone der Löcher (91A) mittels Einspannschrauben (100) eingespannt ist, die in die Extraktionslöcher (91A) eingeführt sind.
